# EUROPEAN PATENT APPLICATION

(11) **EP 0 745 514 A1**
(43) Date of publication of application: **04.12.1996**
(21) Application number: 96108459.7
(22) Date of filing: 28.05.1996
(51) Int. Cl.: B60R 16/02

(54) **A local network control system for use in motor vehicles**

(30) Priority: 29.05.1995 IT TO950430
(71) Applicant: MAGNETI MARELLI S.p.A., 20145 Milano (IT)
(72) Inventor: Borin, Andrea, 29015 Castel S. Giovanni (Piacenza) (IT); Nazha, Hassan, 27028 S. Martino Siccomario (Pavia) (IT)
(74) Representative: Quinterno, Giuseppe

(57) **Abstract**

The system comprises a plurality of electronic units or nodes (1, 2, 3) for controlling respective functions or devices (6, 7) of the motor vehicle. These units (1, 2, 3) are interconnected to form a local network and are preset to communicate in accordance with a predefined protocol. At least one (1) of these units or nodes (1, 2, 3) is preset to send with a predetermined regime or periodicity, to one or more of the other units or nodes (2, 3), information or control messages (M) of which the contents are modified after the occurrence of predetermined events. The unit (1) is preset to input a modified message (M') into the network as soon as one of the above-mentioned predetermined events takes place, and to repeat this message (M'), with the said periodicity or regime, as of the emission of the first modified message (M') and until another of the above-mentioned predetermined events takes place.

## Description

The present invention relates to a control system for use in motor vehicles.

More specifically, the invention relates to a control system comprising a plurality of electronic units or nodes for controlling respective functions or devices of the motor vehicle, which units or nodes are interconnected to form a local network and are preset to communicate with one another in accordance with a predefined standard protocol; at least one of the units or nodes being preset to send with a predetermined periodicity or regime, to one or more of the other units or nodes, information or control messages of which the contents are modified after the occurrence of predetermined events.

Local network control systems for use in motor vehicles are known in which the electronic units or nodes are preset to converse with one another in network in accordance with ISO standard protocols (protocols CAN, VAN, J1850). In these systems, which are referred to generically as "multiplex systems", the information or control messages input into the network are basically of two types: event messages and periodic messages.

In systems operating with the emission of event messages, as soon as a node of the system detects the occurrence of a predetermined event (for example the actuation of a push-button switch, the variation of the state of a sensor, etc.), it sends on the network, to one or more of the other nodes, a message indicating the event which has taken place. In systems of this type, the messages are emitted substantially synchronously with the occurrence of the events which cause them to be sent. Systems operating in this manner have the disadvantage of limited reliability, especially when a message is sent to several nodes. The "acknowledge" procedures intrinsic to the typical protocols used do not always guarantee the reception of the message by all the nodes to which it is addressed.

In systems operating with periodic messages, the messages input into the network are "refreshed" by being sent repeatedly at constant time intervals. These systems are intrinsically more reliable. They have however the disadvantage that the first transmission of a message signalling an event is not sent substantially synchronously with that event but with a delay which, in the worst situation, is equal to the message repetition or refreshing period.

The aim of the present invention is to provide a local network control system for use in motor vehicles, of the type defined above which has the high degree of reliability of known systems operating with periodic message refreshment but which enables the disadvantages thereof described above to be overcome.

This aim is achieved according to the invention using a control system of the type defined above, the principal characteristic of which resides in the fact that at least one of the above-mentioned units or nodes is preset to input a modified message into the network as soon as one of the above-mentioned predetermined events takes place, and to repeat this message, with the above-mentioned periodicity or regime, as of the emission of the modified message and until another of the above-mentioned predetermined events takes place.

In a system according to the invention, the period of repetition or refreshment of the message may be relatively long, for example longer than 500 ms, but nevertheless ensures that a modified message is input into the network synchronously with the occurrence of the associated event concerned.

Other characteristics and advantages of the invention will become clear from the following detailed description, given purely by way of non-limiting example, with reference to the appended drawings, in which:
- Figure 1 is a block diagram of a local network control system according to the invention; and
- Figure 2 is a timing diagram relating to the method of generation, refreshment and resynchronisation of messages input into the communication network of a system according to the invention.

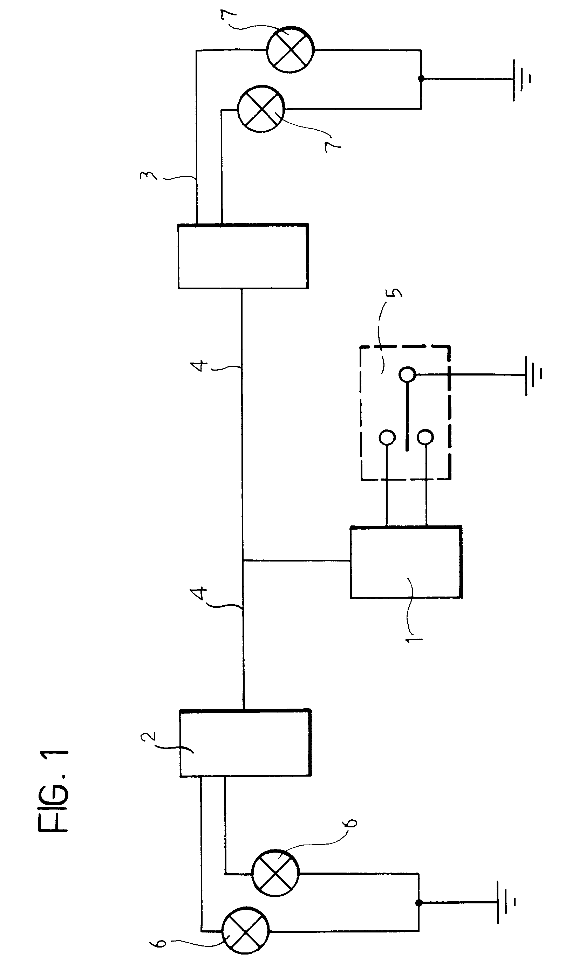

Figure 1 illustrates by way of example a simple multiplex system for controlling the illumination/extinguishment of the external lights of a motor vehicle. This system basically comprises a first electronic unit or node 1, arranged near the dashboard of the motor vehicle, and two other electronic control units or control nodes 2 and 3 arranged in the engine space and luggage space, respectively, of the motor vehicle.

The electronic units or nodes 1, 2 and 3 are interconnected by means of a bus 4 to form a local network and are preset to converse with one another in accordance with a predefined standard communication protocol, for example one of those mentioned above.

The control unit or node 1 is connected to a manually operated switch 5 by means of which the user can give a command to illuminate/extinguish the external lights of the motor vehicle.

The electronic control units or control nodes 2 and 3 are connected to the external lights 6 and 7, respectively, which are arranged at the front part and the rear part, respectively, of the motor vehicle.

In the configuration illustrated, the unit or node 1 receives the commands given with the switch 5, while the units or nodes 2 and 3 are responsible for carrying out the command.

The unit 1 is preset to send, to the units or nodes 2 and 3, with a predetermined periodicity or regime, for example every 250 ms, an information or control message, for example a serial message composed of eight bits, of which, for example, the first indicates the state (illuminated or extinguished) of the lights which has to be brought about.

The repetition or refreshment periodicity or regime of the messages sent from the unit or node 1 to the units or nodes 2 and 3 must necessarily guarantee a high degree of reliability, for example so that the external lights of the motor vehicle are not suddenly extinguished during night driving.

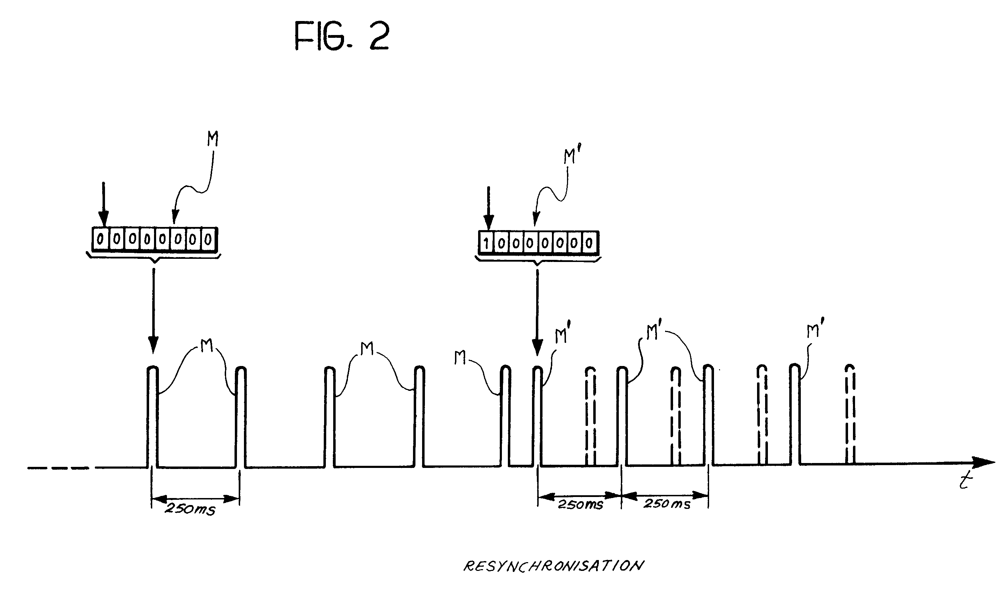

In the timing diagram of Figure 2, in which the time t is entered on the abscissa, the messages M sent from the unit or node 1 to the units or nodes 2 and 3 are shown diagrammatically. This timing diagram relates, in particular, to a case of operation in which the switch 5 is initially in the position corresponding to the extinguishment of the lights 6 and 7. Correspondingly, the unit or node 1 emits, with a periodicity of 250 ms, a message M in which the first bit is (for example) at level "0".

As soon as the switch 5 is moved into the position corresponding to the illumination of the lights 6 and 7, the unit or node 1 inputs into the bus 4 a modified message M' in which the first bit is now (for example) at level "1". The first modified message M' is emitted practically synchronously with the actuation of the switch 5, that is to say, without waiting for 250 ms to pass from the last message M previously input into the network. This ensures the prompt reaction of the whole control system to the command given from outside.

The electronic control unit or control node 1 is also preset to refresh the modified message M' by re-entering it in the bus 4 with the same periodicity (every 250 ms) of refreshment as the preceding messages, but as from the emission of the first modified message M', as shown in Figure 2. In other words, the event represented by the actuation of the switch 5 brings about a resynchronisation of the emission of refreshment messages on the network on this event.

The electronic control unit or control node 1 refreshes the modified message M' with the predetermined regime until the switch 5 is returned to the state corresponding to the extinguishment of the lights 6 and 7. When this fresh event occurs, the unit or node 1 immediately inputs into the network a fresh modified message (in this case again corresponding to the message M) without waiting for the expiry of the refreshment period.

This method of operation enables the messages on the network to be refreshed with a relatively long period while ensuring that the system as a whole reacts rapidly to the occurrence of a fresh event or command. This characteristic is especially useful under certain circumstances, for example when the lights are actuated rapidly in repeated manner (flashing), in which the reaction time of the system has to be relatively brief, for example less than 100 ms.

The control system according to the invention also permits, for example, an excellent synchronisation of the illumination and the extinguishment of the external indicator lights, and of the associated repeater lights which are usually provided on the control panel of the dashboard and sometimes on the control push-button of the switch actuating the indicator lights.

Although the above description refers to an example of application for the control of the external lights of a motor vehicle, it will be appreciated that a local network control system according to the invention can be used for sending any other type of command, for example for sending a command for controlling power-window drivers, from an electronic control unit or control node associated with the door next to the driver's seat to the power-window drivers associated with the other doors of the motor vehicle.

Naturally, the principle of the invention remaining the same, the details of construction and forms of embodiment may vary widely with respect to those described and illustrated purely by way of non-limiting example, without thereby departing from the scope of the present invention as defined in the appended claims.

## Claims

1. A control system for use in motor vehicles, comprising a plurality of electronic units or nodes (1, 2, 3) for controlling respective functions or devices (6, 7) of the motor vehicle, which units or nodes are interconnected to form a local network; at least one (1) of these units or nodes (1, 2, 3) being preset to send with a predetermined periodicity or regime, to one or more of the other units or nodes (2, 3), information or control messages (M, M') of which the contents are modified after the occurrence of predetermined events; the system being characterised in that the said at least one unit or node (1) is preset to input a modified message (M') into the network as soon as one of the said predetermined events takes place, and to repeat this message (M'), with the said periodicity or regime, as of the emission of the said modified message (M') and until another of the said predetermined events takes place.
